(19) Europäisches Patentamt
European Patent Office
Office européen des brevets

(11) EP 2 130 870 A1

## (12) EUROPEAN PATENT APPLICATION
published in accordance with Art. 153(4) EPC

(43) Date of publication:
09.12.2009 Bulletin 2009/50

(21) Application number: 08720628.0

(22) Date of filing: 27.03.2008

(51) Int Cl.:
*C08L 67/00* (2006.01)        *B29C 55/02* (2006.01)
*B32B 27/36* (2006.01)        *C08J 5/18* (2006.01)
*C08K 3/00* (2006.01)         *C08L 23/00* (2006.01)
*C08L 101/00* (2006.01)       *G02B 1/04* (2006.01)
*G02B 5/08* (2006.01)         *B29K 67/00* (2006.01)
*B29L 7/00* (2006.01)         *B29L 9/00* (2006.01)
*B29L 11/00* (2006.01)

(86) International application number:
PCT/JP2008/000749

(87) International publication number:
WO 2008/126359 (23.10.2008 Gazette 2008/43)

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 29.03.2007 JP 2007087728

(71) Applicant: MITSUBISHI PLASTICS, INC.
Tokyo 103-0021 (JP)

(72) Inventors:
• WATANABE, Takayuki
Nagahama-shi
Shiga 526-8660 (JP)

• KATSUHARA, Kazunari
Nagahama-shi
Shiga 526-8660 (JP)
• TAKAGI, Jun
Nagahama-shi
Shiga 526-8660 (JP)

(74) Representative: Gille Hrabal Struck Neidlein Prop
Roos
Patentanwälte
Brucknerstrasse 20
40593 Düsseldorf (DE)

(54) **ALIPHATIC POLYESTER RESIN COMPOSITION, ALIPHATIC POLYESTER FILM, REFLECTIVE FILM AND REFLECTIVE PLATE**

(57) A polyester series film and a reflective film are provided, which realize excellent reflectivity, and moreover, also excel in formability.

An aliphatic polyester series resin composition, which is an aliphatic polyester series resin composition containing an aliphatic polyester series resin, a thermoplastic resin incompatible with said aliphatic polyester series resin ("incompatible resin"), a compatibilizing agent and a fine powder filler, said compatibilizing agent being a SEBS series compound or a glycidyl metacrylate-ethylene series copolymer, or a mixture thereof, is proposed, along with an aliphatic polyester series film comprising a resin layer A formed from said aliphatic polyester series resin composition.

## Description

[Technical field]

The present invention relates to a reflective film and a reflective plate that can be used as a constitutive member of a liquid crystal display, an illumination instrument, an illuminated sign and the like, furthermore, it relates to an aliphatic polyester series resin composition that can be used suitably as a material therefor.

[Technical background]

Reflective plates are being used in many fields, such as, liquid crystal display devices to begin with, illumination instruments and illuminated signs. Recently, particularly in the filed of liquid crystal display devices, enlargement of the devices and advancement of display capabilities have progressed, and by supplying as much light as possible to liquid crystal an increase in the capabilities of backlight units is sought. Therefore, all the more excellent light reflectivity (also simply referred to as "reflectivity") is sought of reflective plates, and in particular of reflective films constituting reflective plates.

As methods to cause a film to express light reflectivity, the method of including a white pigment into a film and the method of mixing into a film constitutive resin, a thermoplastic resin that is incompatible therewith, to form microscopic bubbles within the film, are known.

As the former method, for instance, a method is disclosed in Patent Reference 1 mentioned below, in which an aliphatic polyester series resin serves as a base resin, and at the same time as titanium oxide is included as white pigment, the film is stretched, thereby providing voids within the film to increase further the light reflectivity.

A polyester series film is proposed as a film by the latter method, comprising a resin composition containing in a polyester, titanium oxide particles, a thermoplastic resin incompatible with the polyester and, further, a polyoxyalkylene glycol series compound and/or a compound containing a sulfonate group as a compatibilizing agent (refer to Patent Reference 2).

[Patent Reference 1] Abstract and Claims of Publication No. WO2004/104077
[Patent Reference 2] Japanese Patent Application Laid-Open No. 2000-355090

[Disclosure of the invention]

[Issues to be addressed by the invention]

In the former method, that is to say, the method of including white pigment in a film to cause expression of light reflectivity, increasing the amount of white pigment added is effective in order to increase reflectivity further. However, in so doing, the elastic modulus of the film becomes excessively high, sometimes giving rise to problems when the reflective plate is fold-processed. For instance, if the elastic modulus of a film becomes excessively high, when a reflective plate formed by layering a film over a metal plate is fold-processed, there is the problem that strain remains inside the reflective plate and the dimensions of the reflective plate change during use.

Meanwhile, in the latter method, as raising sufficiently the dispersability of an incompatible thermoplastic resin is difficult, there is the risk that the bubbles (voids) formed around the resin become rough and the reflection capability becomes insufficient. In addition, when these compounds are added, there is also the risk that coloration of the film occurs, decreasing the reflection capability. In addition, while multiplying the amount of bubbles inside the film is effective in order to increase reflectivity further, which also has an effect on the suppression of the elastic modulus of the film, generally, it bears the problem that film-forming ability and mechanical characteristics worsen.

In order to provide a reflective film and a reflective plate allowing excellent reflectivity to be realized, which excels in fold-processability, and further, also in film-forming ability, the present invention proposes an aliphatic polyester series resin composition and an aliphatic polyester series film for forming the reflective film and the reflective plate.

[Means to solve the problems]

The present invention proposes an aliphatic polyester series resin composition, which is an aliphatic polyester series resin composition containing a aliphatic polyester series resin, a thermoplastic resin incompatible with the aliphatic polyester series resin (hereinafter also referred to as "incompatible resin"), a compatibilizing agent and a fine powder filler, the compatibilizing agent being an SEBS series compound or a glycidyl metacrylate-ethylene series copolymer, or a mixture thereof, and at the same time proposes an aliphatic polyester series film provided with a resin layer A formed from the aliphatic polyester series resin composition.

In addition, an aliphatic polyester series film provided with the above-mentioned resin layer A formed from the aliphatic polyester series resin composition and a resin layer B formed from an aliphatic polyester series resin composition B containing an aliphatic polyester series resin and a fine powder filler and not containing the incompatible resin and compatibilizing agent, is proposed.

Note that, "film" generally refers to a thin and flat product in which the thickness is extremely small compared to the length and width, with the maximum thickness being limited arbitrarily, and commonly provided in the form of a roll (Japanese industry specification JIS K6900), and "sheet" generally refers, according to definitions in JIS, to a thin, flat product, the thickness thereof being generally small considering the length and width. However, the boundary between a sheet and a film is not clear and since there is no need in the present invention to distinguish the two literally, in the present invention, "sheet" is deemed included even when called a "film" and "film" is deemed included even when called a "sheet".

[Effects of the invention]

According to the present invention, in addition to refractive scatter due to a refractive index difference between an aliphatic polyester series resin and a fine powder filler, light reflectivity can be obtained from refractive scatter due to a refractive index difference between an incompatible resin and the fine powder filler, furthermore, refractive scatter due to a refractive index difference between the aliphatic polyester series resin and voids formed around the incompatible resin, and the like, allowing excellent reflectivity to be obtained despite the thinness.

In addition, since the elastic modulus of the film can be adjusted to be low by voids formed around fine powder filler and incompatible resin, fold-processability of the film is improved. This also allows the effect of improving dimensional stability to be obtained when the film is turned into a reflective plate.

In addition, SEBS series compounds, glycidyl metacrylate-ethylene series copolymers, and mixtures thereof as compatibilizing agents allow dispersability of incompatible resin in the aliphatic polyester series resin to be raised effectively. In particular, dispersability of incompatible resin in an aliphatic polyester series resin that heat-melts at comparatively low temperatures similarly to lactic acid series polymers can be raised extremely effectively, occurrence of die drool (lump from attachment and deposition on the port lip of an extruder, a T-die and the like) and pimply skin (microscopic film defect) during film-forming can be suppressed, allowing a film having satisfactory product appearance to be manufactured stably and without giving rise to perforation during stretching.

Thus, the aliphatic polyester series resin composition as well as the aliphatic polyester series film proposed by the present invention can be used suitably as materials for a reflective film used as a constitutive member of, for instance, a liquid crystal display, an illumination instrument, an illuminated sign and the like. In addition, layering (laminating) the aliphatic polyester series film on a metal plate or a resin plate, allows for suitable use as a reflective plate used as constitutive material for liquid crystal display, illumination instrument, illuminated sign and the like.

[Best modes for carrying out the invention]

Hereinafter, a reflective film used as a constitutive member of a liquid crystal display, an illumination instrument, an illuminated sign and the like will be described as one example of embodiment of the present invention; however the application of the aliphatic polyester series resin composition as well as the aliphatic polyester series film of the present invention is not limited to such a reflective film.

In the present specification, when the expression "main constituent" is used, unless specifically stated otherwise, it comprises the meaning of allowing another constituent to be contained in a range that does not impede the function of the main constituent. In this case, without specifying the content proportion of the main constituent, the main constituent (when two or more constituents are the main constituents, the total amount thereof) commonly occupies, in the composition, 50 percent in mass or greater, preferably 70 percent in mass or greater and particularly preferably 90 percent in mass or greater (including 100%).

In addition, in the present invention, when the expression "X to Y" (X and Y are arbitrary numbers) is used, unless specifically indicated otherwise, it includes the meaning of "X or greater but Y or less" and at the same time the meanings of "preferably greater than X " and "preferably smaller than Y".

The reflective film according to the present embodiment (hereinafter referred to as "the present reflective film") is an aliphatic polyester series film provided with a resin layer A formed from a resin composition A containing an aliphatic polyester series resin, a thermoplastic resin incompatible with the aliphatic polyester series resin (hereinafter also referred to as "incompatible resin"), a compatibilizing agent and a fine powder filler.

[Resin layer A]

The resin layer A can be formed from a resin composition A containing an aliphatic polyester series resin, a thermoplastic resin incompatible with the aliphatic polyester series resin (hereinafter also referred to as "incompatible resin), a compatibilizing agent and a fine powder filler.

(Base resin of resin layer A)

As aliphatic polyester series resins serving as a base resin of resin layer A (resin serving as the main constituent of resin layer A), those that have been chemically synthesized, those that have been fermentation-synthesized by a microorganism, and mixtures thereof, can be used.

As chemically synthesized aliphatic polyester series resins, aliphatic polyester series resins obtained by ring-opening polymerization of a lactone, such as poly ε-caprolactone, aliphatic polyester series resins obtained by polymerization of a dibasic acid and a diol, such as polyethylene adipate, polyethylene azerate, polyethylene succinate, polybutylene adipate, polybutylene azerate, polybutylene succinate, polybutylene succinate adipate, polytetramethylene succinate and cyclohexane dicarboxylic acid/cyclohexane dimethanol condensate, aliphatic polyester series resins obtained by polymerization of a hydroxy carboxylic acid, such as polylactic acid and polyglycol, aliphatic polyester series resins in which a portion of ester bonds in the aliphatic polyester series resin, for instance, 50% or less of the total ester bonds, has been replaced by amide bonds, ether bonds, urethane bonds and the like, and so on, can be cited.
In addition, as aliphatic polyester series resins fermentation-synthesized by a microorganism, polyhydroxybutyrate, copolymer of hydroxybutyrate and hydroxyvalerate, and the like, can be cited.

It is desirable that the aliphatic polyester series resin used in resin layer A is an aliphatic polyester series resin that does not contain an aromatic ring. If an aliphatic polyester series resin not containing an aromatic ring in the molecular chain, then no ultraviolet light absorption occurs and the film does not deteriorate or yellow by being exposed to ultraviolet light or by receiving ultraviolet light emitted from a light source such as a liquid crystal display device, which can prevent the light reflectivity of the film from decreasing over time.

In the resin layer A, light reflectivity can be obtained by the refractive scatter at the interface between the base resin and the fine powder filler or the like. Since this refractive scatter becomes larger as the difference in the refractive index between the base resin the fine powder filler becomes larger, it is desirable to use a resin with a small refractive index as the base resin so that the refractive index difference with the fine powder filler becomes large.
From such point of view, among the aliphatic polyester series resins mentioned above, it is desirable to use an aliphatic polyester series resin with a refractive index of less than 1.52, and in particular, it is more desirable to use a lactic acid series polymer, which has a small refractive index among aliphatic polyester series resins (refractive index of less than 1.46). In addition, since lactic acid series polymers do not contain an aromatic ring in the molecular chain, they do not give rise to ultraviolet light absorption. Therefore, they are also desirable from point that the reflective film does not deteriorate or yellow, even if exposed to ultraviolet light, or by an ultraviolet light emitted from a light source such as a liquid crystal display device.

Lactic acid series polymer refers to a polymer of D-lactic acid or L-lactic acid alone, or a copolymer thereof. Concretely, there are poly(D-lactic acid) in which the structural unit is D-lactic acid, poly(L-lactic acid) in which the structural unit is L-lactic acid, and furthermore, poly(DL-lactic acid), which is a copolymer of L-lactic acid and D-lactic acid, and in addition, mixtures thereof are also included.

Lactic acid series polymers can be manufactured by well known methods, such as condensation polymerization method and ring-opening polymerization method. For instance, with the condensation polymerization method, a lactic acid series polymer having an arbitrary composition can be obtained by direct dehydration condensation polymerization of D-lactic acid, L-lactic acid or a mixture thereof. In addition, with the ring-opening polymerization method, a lactic acid series polymer having an arbitrary composition can be obtained by ring-opening polymerization of a lactide, which is a cyclic dimer of lactic acid, as necessary while using a polymerization adjuster or the like and in the presence of a given catalyst. The above lactide comprises L-lactide, which is a dimer of L-lactic acid, D-lactide, which is a dimer of D-lactic acid and DL-lactide, which is a dimer of D-lactic acid and L-lactic acid; these are mixed as necessary and polymerized to allow a lactic acid series polymer having an arbitrary composition and crystallinity to be obtained.

Among the lactic acid series polymers described above, those in which the proportion of the contents in D-lactic acid and L-lactic acid is D-lactic acid:L-lactic acid=100:0 to 85:15 or D-lactic acid:L-lactic acid=0:100 to 15:85 are desirable, among which in particular those with D-lactic acid:L-lactic acid=99.5 0.5 to 95:5 or D-lactic acid:L-lactic acid=0.5:99.5 to 5:95 are desirable.
Lactic acid series polymers in which the proportion of the contents in D-lactic acid and L-lactic acid is 100:0 or 0:100 demonstrate extremely high crystallinity, have a high melting point, and tend to have excellent heat resistance and mechanical physical properties. That is to say, when a film is stretched or heat-treated, the resin crystallizes, improving heat resistance and mechanical physical properties, such that they are desirable on this point. Meanwhile, lactic acid series polymers constituted by D-lactic acid and L-lactic acid are conferred flexibility, improving film forming stability and stretching stability, thus they are desirable on this point.

When the balance between heat resistance and forming stability and stretching stability of the obtained reflective film is considered, as lactic acid series polymers used in the resin layer A, it is more desirable that the constitution ratio between D-lactic acid and L-lactic acid is D-lactic acid:L-lactic acid=99.5:0.5 to 95:5 or D-lactic acid:L-lactic acid=0.5: 99.5 to 5:95.

A plurality of species of lactic acid series polymers with different proportions of contents in D-lactic acid and L-lactic acid may be mixed (blended). For instance, difficulty in bleeding and expression of heat resistance can be balanced by blending a homopolymer of D-lactic acid or L-lactic acid and a copolymer thereof.

When mixing a plurality of species of lactic acid series polymers in this way, it suffices that the value averaging the proportions of contents in D-lactic acid and L-lactic acid from a plurality of lactic acid series polymers falls within the range mentioned above.

It is desirable that the molecular weight of the lactic acid series polymer is a high molecular weight. For instance, it is desirable that the weight average molecular weight is 50,000 or greater, 60,000 to 400,000 being more desirable and 100,000 to 300,000 being particularly desirable. If the weight average molecular weight of lactic acid series polymer is less than 50,000, the obtained film sometimes has poor mechanical strength.

Commercial products can be also used as the aliphatic polyester series resin. For instance, Bionolle 3000 series manufactured by SHOWA HIGHPOLYMER CO.,LTD., GS-Pla manufactured by Mitsubishi Chemical Corporation and the like, can be cited. In addition, Lacea series manufactured by Mitsui Chemicals, Inc., NatureWorks series manufactured by NatureWorks LLC and the like, can be cited as lactic acid series polymers.

(Incompatible resin)

As thermoplastic resin incompatible with aliphatic polyester series resin (incompatible resin), polycarbonate series resin, polystyrene series resin, acrylic series resin, polyolefin series resin, and the like, may be cited, among which polyolefin series resin is desirable.

Here, thermoplastic resin incompatible with aliphatic polyester series resin (incompatible resin) refers to a thermoplastic resin, which, when mixed with an aliphatic polyester series resin, demonstrates a state that is not blended (separated state) in the nanometer order (at the molecule level).

Whether or not the resins are incompatible can be assessed if, when the glass transition temperature (hereinafter also referred to as "Tg") of the polymer blend obtained by mixing is measured, not a single Tg but the Tgs of the respective resins appear. More specifically, the resins can be assessed to be incompatible if there are two or more main dispersion peaks for the loss elastic modulus or if there are two or more maximum values for the loss tangent (tan$\delta$), as measured by the temperature dispersion measurement of dynamic viscoelasticity at 0.1 % distortion, 10Hz frequency and 3˚C/ minute temperature rise rate (dynamic viscoelasticity measurement in JIS K-7198, A method), and further in addition, if two or more inflexion points, which indicate glass transition temperatures, appear when glass transition temperature is measured according to JIS K7121 at 10˚C/minute heating rate using a differential scanning calorimeter.

Among the polyolefin series resins, monoolefin polymers such as, for instance, polyethylene and polypropylene, or copolymers thereof, and the like, are desirable.

Concretely, polyethylene series resins such as low density polyethylene, linear low density polyethylene (for instance ethylene-$\alpha$-olefin copolymer), medium density polyethylene and high density polyethylene, polybutylene series resins, polypropylene series resins such as polypropylene and ethylene-propylene copolymer, poly 4-methylpentene, polybutene, ethylene-vinyl acetate copolymer, and the like, can be cited. These resins may be used alone or by mixing two or more species.

Polyolefin series resins include those manufactured using a multi-site catalyst such as a Ziegler catalyst and those manufactured using a single site catalyst such as a metallocene catalyst.

In addition, polyolefin series thermoplastic elastomers comprising ethylene-propylene rubber or the like dispersed in and conjugated with these polyolefin series resins can be also used.

If formability when being formed into sheet-shape, as well as heat resistance after being formed into sheet-shape, and the like, are taken into account, among the polyolefin series resin described above, linear low density polyethylene resins such as ethylene-$\alpha$-olefin copolymer, polypropylene series resins such as polypropylene, ethylene-propylene copolymer, propylene-butene copolymer, ethylene-propylene-butene terpolymer and ethylene-propylene-diene terpolymer, and the like, are desirable, among which polypropylene series resins, and particularly polypropylene and ethylene-propylene copolymer such as ethylene-propylene random copolymer, are desirable.

In addition, from the point of view of reflectance improvement, a polyolefin with a small refractive index is preferred; the use of a polyolefin series resin with a refractive index of less than 1.52 being particularly desirable. For instance, polypropylene series resins, low density polyethylene series resins, polybutylene series resins, polymethylpentene and mixtures and copolymers thereof, and the like, can be cited; among them, polypropylene series resins with a refractive index of greater than 1.50 are desirable.

As polypropylene series resins, homopolypropylene resins, random polypropylene resins, block polypropylene resins, propylene-ethylene rubber, and the like, can be cited.

As polymerization methods for obtaining a polypropylene series resin, well known methods can be adopted such as, for instance, solvent polymerization method, bulk polymerization method and gas phase polymerization method. In addition, as polymerization catalysts, well known catalyst can be adopted, such as, for instance, titanium trichloride-type catalyst, magnesium chloride-supported catalyst and metallocene series catalyst.

Although the melt flow rate (MFR) of polyolefin series resin is not limited in particular, if dispersability into the base resin is taken into consideration, it is desirable that the MFR (temperature: 190°C; load: 2.16kg) is, in the case of a polyethylene series resin, on the order of 0.2 to 40g/10min (190°C; load: 2.16kg), in particular 1 to 20g/10min, among which in particular 3 to 10g/10min. In the case of a polypropylene series resin, 1 to 50g/10min (230°C; load: 2.16kg), in particular 3 to 25g/10min, among which particularly 5 to 15g/10min is desirable.

Note that, in the present invention, MFR is the one measured based on the methods specified in ASTMD-1238. However, the measurements are meant to be measured under each condition indicated in parentheses.

If the MFR of the polyolefin series resin is too small, the extrusion temperature needs to be increased at melt-forming, which can result in yellowing due to heat deterioration of the aliphatic polyester series resin or the polyolefin series resin per se, or a decrease in reflectance due to heat deterioration of the fine particle filler, in particular of titanium oxide. Meanwhile, if the MFR of the polyolefin series resin is too large, there is the possibility that sheet fabrication by melt-forming becomes unstable.

When light reflectivity, elastic modulus, film-forming ability, and the like, of the film are considered, the proportion of the content in incompatible resin with respect to the total mass of resin layer A is preferably 1 to 30 percent in mass and more preferably 3 to 20 percent in mass. If the proportion of the content in incompatible resin is 1 percent in mass or greater, it is desirable since a high light reflectivity and suppression of elastic modulus of the film can be realized simultaneously. In addition, if the proportion of the content in incompatible resin is 30 percent in mass or less, the film-forming ability of the film can be secured.

(Compatibilizing agent)

In the present reflective film, a compatibilizing agent means a compound allowing the dispersability of an incompatible resin with respect to an aliphatic polyester series resin to be increased, by adding such a compatibilizing agent, the size of the disperse phase comprising the incompatible resin can be controlled to a suitable extent.

As compatibilizing agents used in the present reflective film, it is important to use SEBS (styrene=ethylene=butylene=styrene) series compounds or glycidyl metacrylate-ethylene series copolymers, or mixtures thereof. These compatibilizing agents allow the dispersability of the incompatible resin within the aliphatic polyester series resin to be increased effectively. In particular, the dispersability of the incompatible resin can be increased particularly effectively in aliphatic polyester series resins that heat-melt at comparatively low temperatures, such as lactic acid series polymers.

As SEBS series compounds, styrene-ethylene/butylene-styrene block copolymers, hydrogenated-styrene-ethylene/butylene-styrene block copolymers, and furthermore, styrene-ethylene/butylene-styrene block copolymers of the type introduced with a functional group may be cited. In the styrene-ethylene/butylene-styrene block copolymers of the type introduced with a functional group, as the functional groups to be introduced, for instance, acetoxy group, carboxyl group, hydroxyl group, dihydroxyl group, metacryloyl group, epoxy group, and furthermore, glycidyl metacrylate group having an epoxy group, or maleic anhydride constituent, butadiene component, styrene series, acryl series, vinyl series monomer and polymer of the acrylonitrile-styrene series, and the like, may be cited. These functional groups can be introduced alone or by combining two or more species. Among them, styrene-ethylene/butylene-styrene block copolymers of the type introduced with a butadiene component and styrene-ethylene/butylene-styrene block copolymers of the type introduced with a glycidyl metacrylate group are particularly desirable.

As glycidyl metacrylate-ethylene series copolymers, for instance, copolymers and terpolymers comprising glycidyl metacrylate, containing at least an epoxy group, and ethylene may be cited.

Here, as the terpolymer, for instance, terpolymers of epoxy group-containing glycidyl metacrylate, ethylene and vinyl acetate or methyl acrylate, or the like, may be cited. Among them, a terpolymer comprising epoxy group-containing glycidyl metacrylate, ethylene and methyl acrylate is desirable.

When light reflectivity, mechanical physical properties, film-forming ability, and the like, of the film are considered, the proportion of the content in compatibilizing agent with respect to the total mass of the resin layer A is preferably 0.1 to 7 percent in mass and more preferably 1 to 5 percent in mass.

If the proportion of the content in compatibilizing agent is 0.1 percent in mass or greater, it is effective for controlling the size of the dispersed phase of the incompatible resin to a suitable extent and desirable for suppressing the occurrence of die drool (lump from attachment and deposition on the port lip of an extruder, a T-die and the like) and pimply skin (microscopic film defect) at film-forming and for preventing rupture during stretching. In addition, if the proportion of the content in compatibilizing agent is 7 percent in mass or lower, excellent light reflectivity can be conferred to the film. In addition, it is desirable as no detrimental effect is exerted throughout the whole extrusion and film-forming processes.

(Fine powder filler)

As fine powders used in resin layer A, organic fine powder, mineral fine powder, and the like, can be cited.

As organic fine powder, at least one species chosen from cellulose series powders such as wood powder and pulp powder, polymer beads, polymer hollow particles, and the like, can be cited.

As mineral fine powder, at least one species chosen from calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, hydroxyapatite, silica, mica, talc, kaolin, clay, glass powder, asbestos powder, zeolite, soft silica, and the like, can be cited, among which, one species, or, a mixture comprising a combination of two or more species, chosen from the group of calcium carbonate, zinc oxide, barium sulfate and titanium oxide, is desirable. When light reflectivity of the obtained reflective film is considered, those with a large refractive index difference with the base resin is desirable. That is to say, as mineral fine powders, those with a large refractive index, those with 1.6 or greater as a criteria, are desirable. Concretely, it is desirable to use calcium carbonate, barium sulfate, zinc oxide or titanium oxide, which refractive indices are 1.6 or greater, among which titanium oxide, which has a high refractive index, is particularly desirable. However, when long-term durability is considered, barium sulfate, which is stable against acids and alkali, is also particularly desirable.

Note that mineral fine powders and organic fine powders, as shown above as examples, may be used in combination as a fine powder filler. In addition, different fine powder fillers can be used concomitantly; for instance, titanium oxide and another fine powder filler may be used concomitantly.

Since titanium oxide has a refractive index that is remarkably high compared to other mineral fine powders, allowing the refractive index difference with the base resin to be remarkably large, excellent reflectivity can be obtained with less mixing amount than when another filler is used. In addition, using titanium oxide allows a reflective film having high reflectivity to be obtained even if the thickness of the film is thin.

Consequently, it is desirable to use a fine powder filler containing at least titanium oxide, in which case the amount of titanium oxide is preferably 30% or greater of the total mass of the fine powder filler.

As titanium oxides used in resin layer A, titanium oxides of the crystal-type, such as anatase-type and rutile-type are desirable, among which, from the point of view of a large refractive index difference with the base resin, titanium oxide with a refractive index of 2.7 or greater is desirable. On this point, the rutile-type titanium oxide is desirable.

In addition, among the titanium oxides, it is particularly desirable to use a high purity titanium oxide with a high purity. Here, high purity titanium oxide means titanium oxide with a small light absorption capability with respect to visible light, that is to say, titanium oxide in which the contents in colored elements such as vanadium, iron, niobium, copper and manganese are small; in the present invention, a titanium oxide in which the niobium content is 500ppm or less and the vanadium content is 5ppm or less is designated as high purity titanium oxide.

In a high purity titanium oxide, it is important that the niobium content is 500ppm or less, and preferably 400ppm or less. In addition, it is important that the vanadium content is 5ppm or less, and preferably 4ppm or less.

As high purity titanium oxides, for instance, those manufactured by the chlorine method process can be cited. In the chlorine method process, high purity titanium oxide can be obtained by reacting rutile ore, which has titanium oxide as the main constituent, with chlorine gas in a high temperature oven at on the order of 1000°C to generate titanium tetrachloride first and then by burning this titanium tetrachloride with oxygen.

As industrial manufacturing method of titanium oxide, there is also the sulfuric acid method process; however, in the titanium oxide obtained by this method, colored elements such as vanadium, iron, copper, manganese and niobium are contained in large quantities, such that the light absorption capability with respect to visible light becomes large. Consequently, high purity titanium oxide is difficult to obtain by the sulfuric acid method process.

As fine powder fillers, in particular titanium oxides, those provided on the surface with an inert organic oxide layer formed from an inert organic oxide are desirable. By cover treatment of the surface of titanium oxide with an inert organic oxide, the photocatalytic activity of titanium oxide can be suppressed, allowing deterioration of the film due to photocatalytic action of titanium oxide to be prevented.

As inert organic oxide, it is desirable to use at least one species chosen from the group comprising silica, alumina and zirconia. If these inert organic oxides are used, light resistance of the film can be raised without impairing the high light reflectivity exerted when titanium oxide is used. In addition, it is more desirable to use two or more species of inert organic oxides concomitantly, among which combinations in which silica is essential are particularly desirable.

It is desirable that the inert organic oxide layer occupies 0.5 to 7 percent in mass of the total mass of titanium oxide, and in particular 1 to 3 percent in mass. If the inert organic oxide layer is 0.5 percent in mass or greater, it is desirable since maintaining high reflectivity is facilitated. In addition, if the inert organic oxide layer is 7 percent in mass or lower, it is desirable since dispersability into polyester series resin becomes satisfactory allowing a homogeneous film to be obtained.

Note that the proportion occupied by the inert organic oxide layer in the total mass of titanium oxide can be determined by the proportion (represented by a percentage) of the total mass of inert organic oxide used in the surface treatment occupied within the total mass of titanium oxide after surface treatment.

In addition, it is desirable that the mineral fine powder, and in particular titanium oxide, is provided on the surface with an organic compound layer formed from an organic compound, in order to increase dispersability into base resin.

The organic compound layer can be formed by cover treatment of the surface of titanium oxide or the surface of the inert organic oxide layer described above with organic compounds such as, for instance, siloxane compound, silane coupling agent, multivalent alcohol, titanium coupling agent, alkanolamine or derivatives thereof, and higher fatty acid or metal salts thereof, and the like. In particular, cover treatment with at least one species of organic compound chosen from the group comprising siloxane compound, multivalent alcohol, and silane coupling agent is desirable, among which in particular, cover treatment with at least one species of organic compound chosen from the group comprising multivalent alcohol and silane coupling agent is desirable. These two species or more compounds may be combined and used.

By physically adsorbing or chemically reacting with hydroxyl groups on the surface of titanium oxide, these organic compounds can improve the hydrophobicity, dispersability and affinity with the resin, of the titanium oxide.

Here, as the siloxane compounds described above, for instance, dimethyl silicone, methyl hydrogen silicone, alkyl-modified silicone, and the like, can be cited; these can be used alone or by combining two or more species.

As the silane coupling agents described above, for instance, alkoxy silanes having an alkyl group, an alkenyl group, an amino group, an aryl group, an epoxy group, and the like, chlorosilanes and polyalkoxyalkyl siloxanes are desirable, and aminosilane coupling agents are more desirable. Concretely, for instance, aminosilane coupling agents, such as n-β(aminoethyl)γ-aminopropylmethyldimethoxy silane, n-β(aminoethyl)γ-aminopropylmethyltrimethoxy silane, n-β(aminoethyl)γ-aminopropylmethyltriethoxy silane, γ-aminopropyltriethoxy silane, γ-aminopropyltrimethoxy silane and n-phenyl-γ-aminopropyltrimethoxy silane, and alkyl silane coupling agents, such as dimethyldimethoxy silane, methyltrimethoxy silane, ethyltrimethoxy silane, propyltrimethoxy silane, n-butyltrimethoxy silane, n-butyltriethoxy silane, n-butylmethyldimethoxy silane, n-butylmethyldiethoxy silane, isobutyltrimethoxy silane, isobutyltriethoxy silane, isobutylmethyldimethoxy silane, tert-butyltrimethoxy silane, tert-butyltriethoxy silane, tert-butylmethyldimethoxy silane and tert-butylmethyldiethoxy silane, can be cited; these can be used alone or by combining two or more species.

As the multivalent alcohols described above, for instance, trimethylol ethane, trimethylol propane, tripropanol ethane, pentaerythritol, and pentaerythrit, and the like, can be cited, among which trimethylol ethane and trimethylol propane are more desirable. Regarding these multivalent alcohol compounds, these can be used alone or by combining two or more species.

It is desirable that the organic compound layer occupies 0.01 to 5 percent in mass of the total mass of titanium oxide, in particular 0.05 to 3 percent in mass, among which in particular 0.1 to 2 percent in mass.

If the organic compound layer occupies 0.01 percent in mass or greater of the entirety of the titanium oxide, moisture adsorption by the titanium oxide can be prevented and the aggregation of titanium oxide particles can be prevented, therefore, the dispersability of the titanium oxide can be increased. If the dispersability of the titanium oxide is increased, the surface area of the interface between the base resin and titanium oxide is secured thoroughly, therefore, a high light reflectivity can be conferred to the film. Meanwhile, if the organic compound layer is 5 percent in mass or lower of the entirety of the titanium oxide, the lubricity of titanium oxide particle becomes suitable, which enables stable extrusion and film-forming.

The proportion occupied by the organic compound layer in the total mass of titanium oxide can be determined by the proportion (represented by a percentage) of the total mass of organic compound used in the surface treatment occupied within the total mass of titanium oxide after surface treatment.

When a fine powder filler other than titanium oxide is used, in order to increase dispersability into the base resin, it is desirable for this fine powder filler to use one for which a surface treatment has been performed on the surface of the fine powder filler with a silicon series compound, a multivalent alcohol series compound, an amine series compound, a fatty acid, a fatty acid ester, or the like.

The particle diameter of the fine powder filler is preferably 0.05 $\mu$m to 15 $\mu$m, more preferably 0.1 $\mu$m to 10 $\mu$m, among which 0.3 $\mu$m to 10 $\mu$m is more desirable. If the particle diameter of the fine powder filler is 0.05 $\mu$m or greater, dispersability into the base resin is satisfactory, allowing a homogeneous film to be obtained. In addition, if 0.3 $\mu$m or greater, light scatter reflection is generated concomitantly to surface roughening of the film, such that reflection directionality of the obtained film becomes small, which is desirable. In addition, if the particle diameter is 15 $\mu$m or less, the interface between the base resin and the fine powder filler is formed tightly, allowing a film with high reflectivity to be obtained.

When titanium oxide is used as fine powder filler, it is desirable that the particle diameter thereof is 0.1 $\mu$m to 1.0 $\mu$m, and 0.2 $\mu$m to 0.5 $\mu$m is more desirable. If the particle diameter of titanium oxide is 0.1 $\mu$m or greater, dispersability into the base resin is satisfactory, allowing a homogeneous film to be obtained. In addition, if the particle diameter of titanium oxide is 1.0 μm or less, the interface between the base resin and titanium oxide is formed tightly, allowing high light reflectivity to be provided to the reflective film.

When light reflectivity, mechanical physical properties, film-forming ability, and the like, of the film are considered, the content in fine powder filler with respect to the mass of the entirety of the resin layer A is preferably 10 to 50 percent in mass and more preferably 20 to 40 percent in mass.

If the content in fine powder filler is 10 percent in mass or greater, the surface area of the interface between the base resin and fine powder filler can be secured thoroughly, therefore, a high light reflectivity can be conferred to the film. In addition, if the content in fine powder filler is 50 percent in mass or lower, mechanical strength and film-forming ability necessary to the film can be secured.

(Other constituents)

To the extent that the effects of aliphatic polyester series resin, incompatible resin, compatibilizing agent and fine powder filler are not impeded, the resin layer A may contain a resin other than these (referred to as "other constituent resin"). In addition, to the extent that the effects described above are not impeded, an oxidation inhibitor, a light stabilizer, a heat stabilizer, a dispersant, an ultraviolet light absorbent, a fluorescent whitener, and other additives may be contained.

As other constituent resins described above, for instance, when a lactic acid series polymer, or the like, is used as a base resin, addition of a carbodiimide compound, which is an anti-hydrolysis agent, or the like, can be considered for the purpose of conferring durability against an environment with higher temperature and high humidity. Particularly, since liquid crystal displays in recent years are used in car navigation systems for automobiles, small on-board televisions, and the like, in addition to displays for personal computers, rendering necessary those displays that resist high temperature and high humidity, it is desirable to add an anti-hydrolysis agent for the purpose of conferring durability.

As carbodiimide compounds, for instance, those having the fundamental structure of the following General Formula (1) may be given as desirable ones:

$$(1) \qquad -(N=C=N-R-)n-$$

In the formula, n represents the integer 1 or greater and R represents an organic series bond unit. For instance, R can be any of aliphatic, alicyclic and aromatic. In addition, for n, in general, an appropriate integer is selected between 1 to 50.

Concretely, for instance, bis(dipropyl phenyl) carbodiimide, poly(4,4'-diphenylmethane carbodiimide), poly(p-phenylene carbodiimide), poly(m-phenylene carbodiimide), poly(tolyl carbodiimide), poly(diisopropyl phenylene carbodiimide), poly(methyl-diisopropyl phenylene carbodiimide), poly(triisopropyl phenylene carbodiimide) and the like, and monomers thereof, may be cited as carbodiimide compounds. These carbodiimide compounds may be used alone or may be used by combining two or more species.

It is desirable that the amount of carbodiimide compound added is 0.1 to 3.0 parts in mass with respect to 100 parts in mass of aliphatic polyester series resin. If the amount of carbodiimide compound added is 0.1 parts in mass or greater, the effects of improving the resistance to hydrolysis can be expressed sufficiently. In addition, if the amount of carbodiimide compound added is 3.0 parts in mass or less, there is little coloration of the obtained film and light reflectivity is not impaired.

(Porosity)

In order to obtain higher reflection capabilities, and furthermore, in order to obtain a more satisfactory fold-processability, it is desirable to have voids inside the resin layer A. If there are voids inside the resin layer A, in addition to the refractive scatter due to the refractive index difference between aliphatic polyester series resin and fine powder filler and the refractive scatter due to the refractive index difference between incompatible resin and fine powder filler, reflectivity can be obtained also from the refractive scatter due to the refractive index difference between aliphatic polyester series resin and void (air), incompatible resin and void (air), and fine powder filler and void (air).

In addition, it is also desirable to have voids inside the resin layer A, in order to confer a satisfactory fold-processability to the film. If there are voids inside the resin layer A, the elastic modulus of the film (dynamic storage modulus) decreases, allowing fold-processability of the film to be improved. For instance, in case a reflective plate formed by layering the film over a metal plate is fold-processed, since no strain remains in the reflective plate at fold-processing owing to the dynamic storage modulus of the film being adjusted to be low, the dimensions of the reflective plate become resistant to change during use.

Note that this effect of fold-processability improvement is also assumed to be generated by the voids formed at the folding sites of the film absorbing the folding deformation.

A porosity of the resin layer A, that is to say, the proportion occupied inside the resin layer A by the volume portion of the void, of 30 to 60%, of which, from the point of view of reflectance improvement and fold-processability improvement, 35% or greater, is desirable. If porosity of the resin layer A is 30% or greater, reflection capability and fold-processability can be raised sufficiently; in addition, if porosity is 60% or lower, the mechanical strength and film-forming ability of the film are maintained, preventing rupture of film during film fabrication and insufficient durability such as heat resistance during use. Note that the porosity when the film is stretched can be calculated by the following formula.

$$\text{Porosity (\%)} = \{(\text{film density before stretching} - \text{film density after stretching}) / \text{film density before stretching}\} \times 100$$

Voids in resin layer A can be formed for instance by melting the resin composition A, film-forming and stretching the obtained film. This is due to a difference in the stretching behavior between the base resin and the fine powder filler and incompatible resin when stretched. That is to say, if stretching is conducted at a stretching temperature that is suited to the base resin, the base resin serving as the matrix is stretched while the fine powder filler and the incompatible resin tend to remain in an as-is state, such that the base resin and the fine powder filler detach at the interface, forming voids as well as the base resin and the incompatible resin. Consequently, the porosity of resin layer A can be controlled by adjusting the species and amounts of the fine powder filler and incompatible resin, as well as the stretch ratio and the like. In addition, since voids can be also formed inside the resin layer A by adding a foaming agent into the resin composition A to foam, in this case, the porosity of resin layer A can be controlled by adjusting the species and amount of the foaming agent.

In the resin layer A, a disperse phase comprising the incompatible resin is in a disseminated state in the mother phase (matrix) comprising the base resin; in so doing, it is desirable that the mean diameter of the disperse phase is in the range of 0.1 $\mu$m to 5 $\mu$m, and in particular, a range of 0.5 $\mu$m to 3 $\mu$m is more desirable. If the size of the disperse phase is 0.1 $\mu$m or greater, the size of the void formed by stretching becomes one that is sufficient for reflecting light in the visible light region. In addition, if the size of the disperse phase is 5 $\mu$m or less, the surface area of the interface between the void formed by stretching and the base resin can be maintained thoroughly such that high light reflectivity can be conferred to the film, which is desirable. In addition, if the size of the disperse phase is 5 $\mu$m or less, it is desirable since the bubbles formed in the periphery thereof become compact, improving mechanical strength along with stretch film-forming ability.

The size of the disperse phase can be controlled by the species and amount of compatibilizing agent, in addition, it can be also controlled by adjusting the extrusion temperature of the extruder and screw rotation speed of the extruder when the resin composition undergoes melting and film-forming.

(Morphology of resin layer A)

The resin layer A may be a layer comprising a film or may be a layer comprising a molten resin composition formed into a thin film by extrusion or coating or the like (without forming a film). In addition, if comprising a film, although this film may be a non-stretched film or a uniaxially or biaxially stretched film, a stretched film obtained by stretching 1.1-fold or more in at least one axial direction, and particularly a biaxially stretched film are desirable.

[Layered constitution of the present reflective film]

As the layered constitution of the present reflective film, since the provision of a resin layer A suffices, [the film] may be a monolayer film comprising only a resin layer A; in addition, the film may be a layered film provided with a constitution comprising layering a layer other than the resin layer A.

As layered film, for instance, a two-layer layered constitution provided with a resin layer A and a resin layer B containing an aliphatic polyester series resin and a fine powder filler can be cited. In this case, although layering in the resin layer A/resin layer B and resin layer B/resin layer A orders from the side where irradiated by light (side of the surface for reflection use) can be considered, layering in the resin layer B/resin layer A order from the side where irradiated by light (side of the surface for reflection use) is desirable.

In addition, a layer other than resin layer A and resin layer B may be provided, and another layer may be intercalated between each of the resin layer A and the resin layer B. For instance, an adhesive layer may be intercalated between the resin layer A and the resin layer B.

[Resin layer B]

The resin layer B described above can be formed from a resin composition B containing an aliphatic polyester series resin and a fine powder filler, and containing no incompatible resin and compatibilizing agent.

Reflection capability of the present reflective film can be increased further by layering such a resin layer B with the resin layer A.

The aliphatic polyester series resins that can be used for the resin layer B are the same as the aliphatic polyester series resins that can be used for the resin layer A, and the preferred species are the same as well.

In addition, the fine powder fillers that can be used for the resin layer B are the same as the fine powder filler that can be used for the resin layer A. For instance, as fine powder fillers, one species or a mixture comprising a combination of two or more species chosen from the group of calcium carbonate, zinc oxide, barium sulfate and titanium oxide, can be cited. The preferable species of fine powder filler are the same as the fine powder fillers of the resin layer A.

Note that, barium sulfate, which is stable against acids and alkali, is desirable from the point of view of durability of the film, and silica and titanium oxide are desirable from the point of view of appearance of the film.

When light reflectivity, mechanical physical properties, film-forming ability, and the like, of the film are considered, the content in fine powder filler in the resin layer B with respect to the mass of the entirety of resin layer B is preferably 0.1 to 5 percent in mass; 0.1 to 3 percent in mass and among this 0.1 to 1 percent in mass being more desirable.

When integrating the reflective film into a liquid crystal display device, or the like, if the content in fine powder filler in the B layer becomes greater than 5 percent in mass, a tendency for the brightness to decrease notably is observed. The reason for this is thought to be due to the interface between the base resin and the fine particle filler becoming detached to form voids inside the B layer when the B layer is stretched 1.1-fold or more in at least one axial direction, lowering the degree of brilliance.

In addition, when a B layer is provided as the outermost layer of the reflective film, if no fine powder filler is contained in the outermost layer, the film surface being too flat, films rub against each other during fabrication or during transport and the like and are readily scratched due to a so-called roll slippage; therefore, the amount of fine powder filler inside the resin layer B is preferably 0.1 to 5 percent in mass, also from this point.

Further in addition, if no fine powder filler is contained in the outermost layer, detachment occurs readily between the A layer and the B layer, such that the amount of fine powder filler inside the resin layer B is preferably 0.1 to 5 percent in mass, also from this point.

(Other constituents)

To the extent that the effects of aliphatic polyester series resin and fine powder filler are not impeded, the resin layer B may contain a resin other than the aliphatic polyester series resin described above. In addition, to the extent that the effects described above are not impeded, an anti-hydrolysis agent (for instance described above carbodiimide), an oxidation inhibitor, a light stabilizer, a heat stabilizer, a dispersant, an ultraviolet light absorbent, a fluorescent whitener, and other additives may be contained.

(Morphology of resin layer B)

The resin layer B may be a layer comprising a film or may be a layer comprising a molten resin composition formed into a thin film by extrusion or coating or the like (without forming a film). In addition, if comprising a film, although this film may be a non-stretched film or a uniaxially or biaxially stretched film, a stretched film obtained by stretching 1.1-fold or more in at least one axial direction, and particularly a biaxially stretched film are desirable.

[Thickness]

Although the thickness of the present reflective film is not limited in particular, it is preferably 30 $\mu$m to 1500 $\mu$m in general, and preferably within a range on the order of 50 $\mu$m to 1500 $\mu$m when handling ability in practical aspects is considered.

For instance, as a reflective film for a small and thin reflective plate application, it is desirable that the thickness is 30 $\mu$m to 200 $\mu$m. If a reflective film with such a thickness is used, it can be also used for instance in small and thin liquid crystal displays, or the like, of notebook-type personal computers, mobile phones, and the like.

Meanwhile, as reflective films and reflective plates of large liquid crystal televisions, or the like, it is desirable that the thickness is 75 $\mu$m to 1500 $\mu$m.

Note that, when providing a B layer, it is desirable that the thickness ratio between the A layer and the B layer is 20:1 to 1:1, in particular 15:1 to 5:1, among which in particular 12:1 to 7:1. If the thickness ratio of the B layer is greater than when the thickness ratio between the A layer and the B layer is 20:1, it is desirable since the degree of brilliance becomes sufficient, which facilitates obtaining satisfactory light reflection characteristics. In addition, if the thickness ratio of the B layer is smaller than when the thickness ratio between the A layer and the B layer is 1:1, it is desirable since there is no detrimental influence exerted on the reflection characteristics.

[Dynamic storage modulus]

As the elastic modulus of the present reflective film, it is desirable the dynamic storage modulus of the film (E') is adjusted in a range of 1.0GPa to 3.0GPa as measured at 10Hz frequency and 23˚C temperature by dynamic viscoelasticity measurement. If the dynamic storage modulus of the film is 1.0GPa or greater, it is desirable on the point of handling ability since a suitable extent of firmness is obtained in the film; 1.5GPa or greater is more desirable. In addition, if the dynamic storage modulus of film is 3.0Gpa or less, it is desirable on the point that a suitable extent of flexibility is obtained in the film, which allows fold-processability to be secured; 2.5Gpa or less is more desirable.

[Reflectance]

As the reflectance of the present reflective film, it is desirable that the reflectance of the surface with respect to lights of 700nm and 550nm wavelengths is 99.0% or greater as measured from the side of the surface for reflection use. If the reflectance is 99.0% or greater, the reflective film demonstrates satisfactory reflection characteristics, and liquid crystal displays, or the like, which have integrated this reflective film, have satisfactory vividness without the screen thereof taking on a yellow tinge.

[Degree of brilliance]

In the present reflective film, the degree of brilliance, when measured by irradiating light on the side of the surface for reflection use and matching the incidence angle thereof and the light receiving angle to 60˚, is more preferably 50 to 95, and particularly preferably 60 to 85.
Here, "degree of brilliance" is a quantity representing the extent of reflection when light hits the surface of a reflective film, a value indicated by a relative value with respect to a given glass surface defined in JIS Z 8741 serving as a reference surface and defining the degree of brilliance of this reference surface as 100.
Generally, if the degree of brilliance is high, normal reflectivity becomes large and the surface appears glossy; conversely, if the degree of brilliance is low, normal reflectivity also becomes low, and the surface appears to be rough. Also in reflective films, those with high normal reflectivity tend to have high front brightness and satisfactory light reflection capabilities. If the degree of brilliance on the side of the surface for reflection use of the present reflective film at 60˚ is in the range of 50 to 95, satisfactory light reflection capabilities, and in particular satisfactory brightness, are obtained. Such effects appear particularly notably in the case of a constitution in which, sequentially from the liquid crystal side in the internal constitution of a liquid crystal television, a brightness improvement sheet, a diffusion sheet, a diffusion plate, a cold cathode tube and a reflective film are layered. Conversely, if the degree of brilliance is below 50, diffuse reflectivity becomes high, decreasing front brightness. In addition, if the degree of brilliance reaches above 95, when integrated into a backlight, lines of cold cathode tube (emission line) are readily seen, which is not desirable.
Note that, in the present reflective film, in order to set the degree of brilliance to the given ranges described above, one of the important conditions is to adjust the content in fine powder filler in the B layer positioned at the outermost layer on the side of the surface for reflection use, as described above.

[Manufacturing methods]

In the following, a manufacturing method for the present reflective film will be described giving one example; however, [the manufacturing method for the present reflective film] is not to be limited in any way by the manufacturing methods described below.
First, a manufacturing method for a monolayer film comprising only the resin layer A will be described; next a manufacturing method for a bilayer film provided with a resin layer A and a resin layer B will be described.

(Manufacturing method for a monolayer film)

First, a fine powder filler, an incompatible resin, a compatibilizing agent, and other additives, and the like, are mixed as necessary with an aliphatic polyester series resin, to prepare an aliphatic polyester series resin composition A. Concretely, the resin composition A can be obtained by adding a fine powder filler, an incompatible resin and a compatibilizing agent to an aliphatic polyester series resin, as necessary further adding an additive such as an oxidation inhibitor, mixing with a ribbon blender, tumbler, Henschel mixer or the like, and then kneading at a temperature equal to the melting point of the resin or higher using a Banbury mixer, a uniaxial or biaxial extruder, or the like.
However, the resin composition A can be also obtained by adding to the aliphatic polyester series resin, given amounts of the fine powder filler, the incompatible resin, the compatibilizing agent and the additives, or the like, with separate feeders or the like. In addition, a so-called master batch can be manufactured, comprising the fine powder filler, the incompatible resin, the compatibilizing agent, the additives and the like, pre-mixed at high concentrations in the aliphatic polyester series resin, and it is also possible to obtain a resin composition A at the desired concentration by mixing this master batch and the aliphatic polyester series resin.

Next, the resin composition A obtained in this way is melted and formed into a film-shape. For instance, the aliphatic polyester series resin composition A is supplied to an extruder and heated and melted at a temperature equal to or higher than the melting point of the resin. Although it is necessary to consider the decrease in molecular weight due to decomposition and the like to set conditions such as the extrusion temperature, for instance, in the case of a lactic acid series polymer, it is desirable that the extrusion temperature is in the range of 170˚C to 230˚C. Thereafter, the molten aliphatic polyester series resin composition is extruded from a slit-shaped discharge port of a T die, brought in firm contact with a cooling roll and solidified to form a cast sheet.

In so doing, the size of the disperse phase can be controlled by adjusting the extrusion temperature of the extruder and the screw rotation speed of the extruder.

It is desirable that the obtained cast sheet is stretched 1.1-fold or more in at least one axial direction.

By stretching, voids having fine powder filler and incompatible resin as the cores are formed inside the film, allowing light reflectivity of the film to be increased further, which is desirable. This is thought to be due to the new formation of interfaces between aliphatic polyester series resin and void, void and titanium oxide, and void and incompatible resin, thus increasing the effects of refractive scatters generated at these interfaces.

Furthermore, stretching in two axial directions is desirable. This is because biaxially stretching increases the porosity, which allows the light reflectivity of the film to be raised. In addition, if the film is stretched only uniaxially, the formed void has only a fibrous morphology elongated in one direction; however by biaxially stretching, the void is stretched in both vertical and horizontal directions and has a discoidal morphology. That is to say, biaxially stretching increases the surface area of the detachment of the interfaces between the aliphatic polyester series resin and the fine powder filler, and aliphatic polyester series resin and incompatible resin, which promotes bleaching of the film, and as a result, allowing the light reflectivity of the film to be raised. Further in addition, anisotropy in the shrinking direction of the film disappears by biaxially stretching, allowing the heat resistance of the reflective film to be improved; in addition, the mechanical strength of the film can be also increased.

The stretching order of the biaxial stretching is not limited in particular; for instance, whether simultaneous biaxial stretching or successive stretching does not matter. After melt-film-forming using a stretching equipment, stretching in the MD by roll-stretching and then stretching in the TD by tenter-stretching may be carried out, and biaxial stretching may be carried by tubular stretching or the like.

For the stretch ratio of the film in the case described above, stretching 5-fold or more as surface area ratio is desirable, and stretching 7-fold or more is more desirable. By stretching 5-fold or more in surface area ratio, a porosity of 10% or greater can be realized, by stretching 7-fold or more, a porosity of 20% or greater can be realized, and by stretching 7.5-fold or more, a porosity of 30% or greater can be realized.

The stretching temperature when stretching a cast sheet is preferably a temperature within a range from on the order of the glass transition temperature (Tg) of the resin to (Tg+50˚C); for instance, in the case of a lactic acid series polymer, 50 to 90˚C is desirable. If the stretching temperature is in this range, a film with a high film-forming stability can be obtained without the film rupturing during stretching. In addition, since stretching orientation is high, which allows the porosity to be large, a film having high reflectance and at the same time suppressed elastic modulus can be obtained.

After stretching as described above, the film may be heat-treated as necessary with suitable methods and conditions.

(Manufacturing method for a bilayer film provided with a resin layer A and a resin layer B)

In the following, a manufacturing method for a film having a bilayer constitution provided with a resin layer A and a resin layer B will be described.

An aliphatic polyester series resin composition A is manufactured similarly to described above.

Meanwhile, an aliphatic polyester series resin composition B comprising a fine powder filler, other additives and the like as necessary mixed with an aliphatic polyester series resin is manufactured. Concretely, the resin composition B can be obtained by adding a fine powder filler to an aliphatic polyester series resin, as necessary further adding an additive such as an oxidation inhibitor, mixing with a ribbon blender, tumbler, Henschel mixer or the like, and then kneading at a temperature equal to or higher than the melting point of the resin using a Banbury mixer, a uniaxial or biaxial extruder, or the like.

However, the resin composition B can be also obtained by adding to the aliphatic polyester series resin, given amounts of the fine powder filler and the additives, or the like, with separate feeders or the like. In addition, a so-called master batch can be manufactured, comprising the fine powder filler, the additives and the like, pre-mixed at high concentrations in the aliphatic polyester series resin, and it is also possible to obtain a resin composition B at the desired concentration by mixing this master batch and the aliphatic polyester series resin.

Then, it suffices that the aliphatic polyester series resin composition A and the aliphatic polyester series resin composition B described above are each supplied to separate extruders, heated and melted at temperatures equal to the melting points of each resin or higher, flown together into a T-die for two species and two layers use, extruded from the slit-shaped discharge port of the T-die into a laminate-shape, and solidified by tight contact with a cooling roll to form a cast film. In so doing, the size of the disperse phase can be controlled by adjusting the extrusion temperature of the extruder and the screw rotation speed of the extruder. Note that the extrusion conditions and the like are the same as in the case of a monolayer film.

Then, stretching and heat treatments of the obtained cast film are the same as in the case of a monolayer film.

[Applications]

Although the present reflective film, when used still in film shape, is particularly useful as a reflective film for large liquid crystal televisions or the like, it can be also used suitably as a reflective plate [obtained] by covering a metal plate (for instance, aluminum plate, stainless plate, zinc-plated steel plate and the like) or a resin plate. This reflective plate is useful as a reflective plate used in, for instance, liquid crystal display devices such as a liquid crystal displays, illumination instruments, illuminated signs and the like.

A manufacturing method for such a reflective plate will be described below by giving one example.

As methods for covering a metal plate or a resin plate with the reflective film, methods using an adhesive, methods of heat-fusing without using an adhesive, methods of adhering via an adhesive sheet, methods of extrusion coating, and the like, exist and are not limited in particular. For instance, it is possible to coat with an adhesive of the polyester series, polyurethane series, epoxy series or the like, the surface on the side of the metal plate or the resin plate (collectively referred to as "metal plate or the like") where the reflective film is to be pasted, and paste the reflective film.

In such a method, a generally used coating equipment such as a reverse roll coater or a kiss roll coater is used to coat with an adhesive the surface of a metal plate or the like where the reflective film is to be pasted so that the adhesive film thickness is on the order of 2 μm to 4 μm after drying. Next, drying and heating of the coated surface is carried out with a infrared radiation heater and a hot air furnace, and while holding the surface of the metal plate or the like at a given temperature, a roll laminator is used immediately for covering the plate with the reflective film and cooling, allowing a reflective plate to be obtained.

In this case, if the surface of the metal plate or the like is held at 210°C or lower, the light reflectivity of the reflective plate can be maintained high. Note that the surface temperature of the metal plate or the like is preferably 160°C or higher.

[Examples]

Hereinafter, examples will be shown to describe the present invention more concretely; however, the present invention is not limited to these, and a variety of applications are possible within limits not departing from the technical thoughts of the present invention.

Note that the measurement and the evaluations shown in the examples were performed as described below. Here, receiving (flow) direction of the film is represented with MD, and the direction perpendicular thereto with TD.

(Measurements and evaluation methods)

(1) Film-forming ability

In each Example and Comparative Example, when a reflective film was film-formed, the die drool attachment state of the port lip portion of the T-die and the pimply skin appearance state of the film surface were observed, and evaluation of film-forming ability was conducted based on the following evaluation criteria. However, the notations "circle" and "triangle" were at practical levels or above.

(Evaluation criteria)

Circle: no appearance of die drool was observed on the lip portion and no appearance of pimply skin was observed on the film surface either, even after six hours from the beginning of the film-forming of the reflective film.
Triangle: appearance of die drool was observed on the lip portion but no appearance of pimply skin was observed on the film surface after six hours from the beginning of the film-forming of the reflective film.
Cross: appearance of die drool was observed across the entire width of the lip portion at after three hours from the beginning of the film-forming of the reflective film. Moreover, drop-shaped pimply skins were also observed on the film surface, in some cases generating holes during stretching.

(2) Mean diameter of the disperse phase comprising incompatible resin

The neighborhood of the center of the film cross section (in the range of center ±25 μm in the thickness direction) was photographed enlarged at 1,000-fold magnification with a scanning electron microscope, then, a drawing of the disperse phase traced on a tracing film was image processed with an image analysis software (Image-Pro Plus manufactured by Media Cybernetics Inc.) to determine the mean equivalent circle diameter, which served as the mean diameter of the disperse phase.
Here, the equivalent circle diameter was determined as the diameter of a circle having the same surface area as the projected surface area of the disperse phase.

(3) Porosity (%)

The density of the film prior to stretching (represented as "non-stretched film density") and the density of the film after stretching (represented as "stretched film density") were measured and substituted in the following formula to determine the porosity of the film.

$$\text{porosity (\%)} = \{(\text{non-stretched film density} - \text{stretched film density})/\text{non-stretched film density}\} \times 100$$

(4) Reflectance (%)

A spectrophotometer ("U-4000", manufactured by Hitachi, Ltd.) was fitted with an integrating sphere to measure the reflectance with respect to light a wavelengths of 700nm and 550nm.
Note that prior to the measurement, the photometer was set so that the reflectance of alumina white board was 100%.

(5) Dynamic storage modulus (E')

Dynamic viscoelasticity was measured in the longitudinal direction using a viscoelasticity spectrometer DVA-200 (manufactured by IT Keisoku K.K.), with measurement temperatures in the range of -100˚C to 150˚C, under the conditions of 10Hz oscillation frequency, 0.1 % distortion, 2˚C/minute temperature rise rate and 2.5cm chuck spacing. The numerical value at 23˚C was read as the dynamic storage modulus (E'). Note that the film was cut accurately to a size of 4mm horizontal × 60mm vertical to serve as sample.

(6) Fold-processability

The reflective plates manufactured in Examples 8-11 and Comparative Example 4 were fold-processed into a U letter shape (width dimension of the opening interior: 6.00mm; depth: 5.5mm) to serve as sample for evaluation.
This sample for evaluation was left for three hours in a hot air-circulating oven thermally adjusted to 85˚C then taken out to measure the width dimension of the opening interior with a pin gauge.
The dimension measurement values were substituted in the following formula to calculate the amount of change in the width of the opening interior, and evaluation of fold-processability was carried out based on the following evaluation criteria.
However, the notations "circle" and "triangle" were at practical levels or above.
Amount of change in the width of the opening interior = width dimension of opening interior before heating - width dimension of opening interior after heating

(Evaluation criteria)

Circle: amount of change in the width of the opening interior is less than 0.05 mm
Triangle: amount of change in the width of the opening interior is 0.05mm or greater but 0.10 mm or less
Cross: amount of change in the width of the opening interior exceeds 0.10mm

[Example 1]

(Preparation of resin composition)

Pellets of a lactic acid series polymer with a weight average molecular weight of 160,000 (NW3001 D, manufactured by NatureWorks LLC; L isomer content: 98.5%; D isomer content: 1.5%), pellets of rutile-type titanium oxide by the chlorine method process (Ti-Pure R-105, manufactured by Du Pont K.K.) and pellets of polypropylene (Novatech PP FY-4, manufactured by Japan Polypropylene Corporation; MFR=5g/10min) were mixed in a mass proportion of 33: 50:17 to form a mixture.

With respect to 100 parts in mass of this mixture, 2.5 parts in mass of anti-hydrolysis agent (bis(dipropyl phenyl)carbodiimide), furthermore, 3.5 parts in mass of a styrene-ethylene/butylene-styrene block copolymer of the type introduced with a butadiene component (Dynalon 8630P: manufactured by JSR Corporation, butadiene/styrene/ethylene/butylene = 1/14/30/55 percent in weight) as SEBS series compound were added and mixed, and then pelletized using a biaxial extruder to prepare a so-called master batch.

This master batch and the above-mentioned lactic acid series polymer were mixed in a mass proportion of 60:40 to prepare a resin composition.

(Preparation of film)

The obtained resin composition was supplied to an extruder heated to 200˚C and kneaded at 200˚C using this extruder, next, the resin composition in molten state was extruded into sheet-shape from a T-die and solidified by cooling to obtain a film.

The obtained film was roll-stretched 2.3-fold at 65˚C in the MD and then further tenter-stretched 3-fold at 84˚C in the TD to perform biaxial stretching, furthermore, was heat-treated at 140˚C, to obtain a 230 μm-thick reflective film.

Evaluation of the mean diameter of the disperse phase comprising the incompatible resin, the porosity, the reflectance and the dynamic storage modulus was carried out for the obtained reflective film. The results are shown in Table 1. In addition, measurements of the degree of brilliance and brightness were also carried out, the results of which are shown in Table 2.

[Example 2]

A reflective film was obtained similarly to Example 1, except for the point that 3.5 parts in mass of glycidyl metacrylate-ethylene series copolymer (Bond First 7M: manufactured by Sumitomo Chemical Co.,Ltd.; glycidyl metacrylate/ethylene/methyl acrylate = 6:64:30 percent in weight) was added instead of the SEBS series compound in the preparation of resin composition of Example 1.

The same evaluation as Example 1 was carried out on the obtained reflective film. The results are shown in Table 1.

[Example 3]

A reflective film was obtained similarly to Example 1, except for the point that 3.5 parts in mass of styrene-ethylene/butylene-styrene block copolymer of the type introduced with a glycidyl metacrylate group (styrene/ethylene/ butylene/glycidyl metacrylate = 2/63/28/7 percent in weight) was added as the SEBS series compound in the preparation of resin composition of Example 1.

The same evaluation as Example 1 was carried out on the obtained reflective film. The results are shown in Table 1.

[Example 4]

A reflective film was obtained similarly to Example 1, except for the point that SEBS series compound (Dynalon 8630P: manufactured by JSR Corporation) along with glycidyl metacrylate-ethylene series copolymer (Bond First 7M: manufactured by Sumitomo Chemical Co.,Ltd.) were added respectively, at 1.7 parts in mass each, in the preparation of resin composition of Example 1.

The same evaluation as Example 1 was carried out on the obtained reflective film. The results are shown in Table 1.

[Example 5]

A reflective film was obtained similarly to Example 1, except for the point that pellets of lactic acid series polymer with a weight average molecular weight of 160,000 (NW3001 D: manufactured by NatureWorks LLC; L isomer content: 98.5%; D isomer content: 1.5%), rutile-type titanium oxide from a chlorine method process (Ti-Pure R-105: manufactured by Du Pont K.K.) and polypropylene pellets (Novatech PP FY-4: manufactured by Japan Polypropylene Corporation) were mixed at a proportion in mass of 42:50:8 to obtain a mixture, in the preparation of resin composition of Example 1. The same evaluation as Example 1 was carried out on the obtained reflective film. The results are shown in Table 1.

[Example 6]

(Preparation of resin composition A)

Pellets of lactic acid series polymer with a weight average molecular weight of 160,000 (NW3001 D: manufactured by NatureWorks LLC; L isomer content: 98.5%; D isomer content: 1.5%), rutile-type titanium oxide from a chlorine method process (Ti-Pure R-105: manufactured by Du Pont K.K.) and polypropylene pellets (Novatech PP FY-4: manufactured by Japan Polypropylene Corporation: MFR=5g/10min) were mixed at a proportion in mass of 33:50:17 to form a mixture.
With respect to 100 parts in mass of this mixture, 2.5 parts in mass of anti-hydrolysis agent (bis(dipropyl phenyl)carbodiimide), furthermore, 3.5 parts in mass of a styrene-ethylene/butylene-styrene block copolymer of the type introduced with a butadiene component (Dynalon 8630P: manufactured by JSR Corporation, butadiene/styrene/ethylene/butylene = 1/14/30/55 percent in weight) as SEBS series compound were added and mixed, and then pelletized using a biaxial extruder to prepare a so-called master batch.
This master batch and a lactic acid series polymer were mixed in a mass proportion of 60:40 to prepare resin composition A.

(Preparation of resin composition B)

Pellets of the obtained lactic acid series polymer (NW3001 D) and the rutile-type titanium oxide (Ti-Pure R-105) described above were mixed at a proportion in mass of 99:1 to form a mixture. With respect to 100 parts in mass of this mixture, 3.5 parts in mass of the anti-hydrolysis agent described above was added and mixed, and then pelletized using a biaxial extruder to prepare a so-called master batch.
This master batch and a lactic acid series polymer were mixed in a mass proportion of 60:40 to prepare resin composition B.

(Preparation of film)

The resin compositions A and B were each supplied to separate extruders A and B heated to 200˚C, melt-kneaded at 200˚C in each extruder, then, flown together into a T-die for two species and two layers use, extruded into a sheet-shape so as to have the bilayer constitution B layer/A layer, and solidified by cooling to form a layered film. The obtained layered film was roll-stretched 2.3-fold at 65˚C in the MD and then further tenter-stretched 3-fold at 84˚C in the TD to perform biaxial stretching, furthermore, was heat-treated at 140˚C to obtain a 230 µm-thick reflective film (A layer: 210 µm; B layer: 20 µm).
Evaluation of the mean diameter of the disperse phase comprising the incompatible resin, the porosity, the reflectance and the dynamic storage modulus was carried out for the obtained reflective film. The results are shown in Table 1. In addition, measurements of the degree of brilliance and brightness were also carried out, the results of which are shown in Table 2.
In so doing, regarding porosity inside the A layer, the resin composition A was supplied to extruder A and a monolayer film having the A layer only (thickness: 210 µm) was obtained according to the operations described above to carry out the evaluation.
The evaluation of degree of brilliance was carried out according to JIS Z 8741 by matching the incidence angle thereof and the light receiving angle to 60˚. However, light irradiation was performed on the side of the surface for reflection use, that is to say, the B layer side of the reflective film, to measured the degree of brilliance. The "digital variable angle gloss meter model UGV-5DP (manufactured by Suga Test Instruments Co., Ltd. Instruments)" was used for the measurement.
The reflectance was measured similarly to Example 1; however, light irradiation was performed on the side of the surface for reflection use, that is to say, the B layer side of the reflective film.
For the measurement of the brightness, the manufactured reflective film was integrated inside a 26-inch liquid crystal backlight unit (manufactured by SAMSUNG CORPORATION, LTA260W-02), CCFL, a diffusion plate, a diffusion sheet and a brightness improvement sheet were stacked in this order and a luminance meter (manufactured by Topcon Engineering K.K., BM-7) was used to carry out measurement of the central brightness, which served as the measurement value. In so doing, the distance between the backlight unit and the luminance meter was 0.5m.
Note that as a reference, evaluation of the degree of brilliance and brightness was also carried out for the monolayer reflective film obtained in Example 1. The results are shown in Table 2.

[Comparative Example 1]

A reflective film was obtained similarly to Example 2, except for the point that the glycidyl metacrylate-ethylene series copolymer was not mixed in the preparation of resin composition of Example 2. The same evaluation as Example 1 was carried out on the obtained reflective film. The results are shown in Table 1.

[Comparative Example 2]

A reflective film was obtained similarly to Example 1, except for the point that 3.5 parts in mass of polyethyleneglycol (manufactured by Nacalai Tesque Inc.; molecular weight: 4,000) was added instead of the SEBS series compound in the preparation of resin composition of Example 1.
The same evaluation as Example 1 was carried out on the obtained reflective film. The results are shown in Table 1.

[Comparative Example 3]

(Preparation of resin composition A)

Pellets of lactic acid series polymer with a weight average molecular weight of 160,000 (NW3001 D: manufactured by NatureWorks LLC; L isomer content: 98.5%; D isomer content: 1.5%), rutile-type titanium oxide from a chlorine method process (Ti-Pure R-105: manufactured by Du Pont K.K.) were mixed at a proportion in mass of 50: 50 to form a mixture. With respect to 100 parts in mass of this mixture, 2.5 parts in mass of anti-hydrolysis agent (bis(dipropyl phenyl)carbodiimide) was added and mixed, and then pelletized using a biaxial extruder to prepare a so-called master batch. This master batch and a lactic acid series polymer were mixed in a mass proportion of 60:40 to prepare resin composition A.

(Preparation of resin composition B)

Pellets of the lactic acid series polymer (NW3001 D) described above and the rutile-type titanium oxide (Ti-Pure R-105) described above were mixed at a proportion in mass of 99:1 to form a mixture.
With respect to 100 parts in mass of this mixture, 3.5 parts in mass of the anti-hydrolysis agent described above was added and mixed, and then pelletized using a biaxial extruder to prepare a so-called master batch.
This master batch and a lactic acid series polymer were mixed in a mass proportion of 60:40 to prepare resin composition B.

(Preparation of film)

The resin compositions A and B were each supplied to separate extruders A and B heated to 200˚C, melt-kneaded at 200˚C in each extruder, then, flown together into a T-die for two species and two layers use, extruded into a sheet-shape so as to have the bilayer constitution B layer/A layer, and solidified by cooling to form a layered film.
The obtained layered film was roll-stretched 2.5-fold at 65˚C in the MD and then further tenter-stretched 3-fold at 78˚C in the TD to perform biaxial stretching, furthermore, was heat-treated at 140˚C to obtain a 150 $\mu$m-thick reflective film (A layer: 135 $\mu$m; B layer: 15 $\mu$m). The same evaluation as Example 1 was carried out on the obtained reflective film. The results are shown in Table 1.

[Example 7]

(Preparation of film)

A reflective film was obtained similarly to Example 6, except for the point that a 150 $\mu$m-thick reflective film (A layer: 135 $\mu$m; B layer: 15 $\mu$m) was obtained in the preparation of film of Example 6.
The same evaluation as Example 1 was carried out on the obtained reflective film. In so doing, regarding porosity inside the A layer, the resin composition A was supplied to extruder A and a monolayer film having the A layer only (thickness: 135 $\mu$m) was obtained according to the operations described above to carry out the evaluation. The results are shown in Table 1.

[Example 8]

(Preparation of reflective plate)

A SUS304 plate (thickness: 0.2mm) was covered by the following procedure with the reflective film obtained in Example 1 to obtain a reflective plate.

The SUS304 plate surface was coated with a commercialized polyester series adhesive so that the adhesive film thickness is on the order of 2 $\mu$m to 4 $\mu$m after drying. Next, , drying and heating of the coated surface was carried out with a infrared radiation heater and a hot air furnace, and while holding the surface temperature of the SUS304 plate at 180°C, a roll laminator was used immediately for covering the plate with the reflective film and cooling, to obtain a reflective plate.

Evaluation of fold-processability was performed for the obtained reflective plate. The results are shown in Table 3.

[Example 9]

(Preparation of reflective plate)

A reflective plate was obtained similarly to Example 8, except for the point that SUS304 plate (thickness: 0.2mm) was covered with the reflective film obtained in Example 5 to obtain the reflective plate in the preparation of reflective plate of Example 8. The same evaluation as Example 8 was carried out on the obtained reflective plate. The results are shown in Table 3.

[Example 10]

(Preparation of reflective plate)

A reflective plate was obtained similarly to Example 8, except for the point that SUS304 plate (thickness: 0.2mm) was covered with the reflective film obtained in Example 6 to obtain the reflective plate in the preparation of reflective plate of Example 8. The same evaluation as Example 8 was carried out on the obtained reflective plate. The results are shown in Table 3.

[Example 11]

(Preparation of reflective plate)

A reflective plate was obtained similarly to Example 8, except for the point that SUS304 plate (thickness: 0.2mm) was covered with the reflective film obtained in Example 7 to obtain the reflective plate in the preparation of reflective plate of Example 8. The same evaluation as Example 8 was carried out on the obtained reflective plate. The results are shown in Table 3.

[Comparative Example 4]

(Preparation of reflective plate)

A reflective plate was obtained similarly to Example 8, except for the point that SUS304 plate (thickness: 0.2mm) was covered with the reflective film obtained in Comparative Example 3 to obtain the reflective plate in the preparation of reflective plate of Example 8. The same evaluation as Example 8 was carried out on the obtained reflective plate. The results are shown in Table 3.

[Table 1]

|  |  | Film forming ability | Mean dispersed particle diameter | Porosity | Dynamic storage modulus | Reflectance (%) | |
|---|---|---|---|---|---|---|---|
|  |  |  | (μm) | (%) | (GPa) | 700nm | 550nm |
| Example | 1 | ○ | 0.9 | 40 | 1.8 | 99.3 | 99.9 |
|  | 2 | Δ | 2.8 | 45 | 1.7 | 99.1 | 99.7 |
|  | 3 | ○ | 1.8 | 46 | 1.7 | 99.3 | 99.9 |
|  | 4 | ○ | 1.5 | 44 | 1.8 | 99.2 | 99.8 |
|  | 5 | ○ | 0.8 | 33 | 1.9 | 99.3 | 99.9 |
|  | 6 | ○ | 0.8 | (A layer) 40 | 2.4 | 99.5 | 100 |
|  | 7 | ○ | 0.9 | (A layer) 39 | 2.4 | 99.0 | 99.8 |
| Comparative Example | 1 | × | 5.1 | 41 | 1.8 | 98.7 | 99.6 |
|  | 2 | Δ | 5.2 | 39 | 1.9 | 98.8 | 99.6 |
|  | 3 | ○ | - | (A layer) 28 | 4 | 98.4 | 99.6 |

[Table 2]

|  |  | Degree of brilliance | Brightness (cd/m$^2$) |
|---|---|---|---|
| Example | 1 | 23.8 | 7650 |
|  | 6 | 82.9 | 7840 |

[Table 3]

|  |  | Amount of change in the width of the opening interior (mm) | Fold-processability Assessment |
|---|---|---|---|
| Example | 8 | 0.03 | ○ |
|  | 9 | 0.05 | Δ |
|  | 10 | 0.04 | ○ |
|  | 11 | 0.03 | ○ |
| Comparative example | 4 | 0.14 | × |

As is clear from Table 1, the reflective films of Example 1 to 7 had high light reflectivity with reflectances of 99.0% or greater with respect to light at both wavelengths of 700nm and 500nm. In addition, the reflective films of Example 1 to 7 were found to have satisfactory film-forming abilities at practical use levels or grater. In addition, the reflective films of Example 1 to 7 were found to have store elastic moduli suppressed to 3.0Gpa or below.

Meanwhile, the reflective films of Comparative Example 1 to 3 had reflectances with respect to light at 700nm wavelength of less than 99.0%; in addition, the reflective film of Comparative Example 1 was also found to be poorer than the reflective films of Example 1 to 7 regarding film-forming ability.

Since the mean diameter of the disperse phase was less than 3 μm, the surface area of the interface between the voids formed by stretching and the aliphatic polyester series resin could be secured thoroughly, and furthermore, the formed bubbles were compact, the reflective films of Example 1 to 7 were assumed to have satisfactory reflection capability and film-forming ability.

In addition, as is clear from Table 2, the reflective film of Example 6 was found to have improved light reflectivity compared to the reflective film of Example 1. This is assumed to be due to the front brightness becoming high owing to the degree of brilliance, that is to say, the normal reflectivity becoming all the more higher.

In addition, as is clear from Table 3, compared to the reflective plate of Comparative Example 4, the reflective plates of Example 8 to 11 had an amount of shrinkage in the width of the opening interior of 0.10mm or less, that is to say, were found to have excellent fold-processability. This is assumed to be due to the porosity being adjusted to 30% or higher at the same time as the dynamic storage modulus being adjusted to 3.0Gpa or lower.

**Claims**

1.  An aliphatic polyester series resin composition, which is an aliphatic polyester series resin composition containing an aliphatic polyester series resin, a thermoplastic resin incompatible with said aliphatic polyester series resin, a compatibilizing agent and a fine powder filler, said compatibilizing agent being a SEBS series compound or a glycidyl metacrylate-ethylene series copolymer, or a mixture thereof.

2.  The aliphatic polyester series resin composition according to claim 1, wherein said aliphatic polyester series resin is a lactic acid series polymer.

3.  The aliphatic polyester series resin composition according to claim 1 or 2, wherein said thermoplastic resin incompatible with said aliphatic polyester series resin is a polyolefin series resin.

4.  The aliphatic polyester series resin composition according to any of claim 1 to 3, wherein said fine powder filler is one species or a mixture comprising the combination of two or more species chosen from the group of calcium carbonate, zinc oxide, barium sulfate and titanium oxide.

5.  The aliphatic polyester series resin composition according to any of claim 1 to 4 further containing an anti-hydrolysis agent.

6.  An aliphatic polyester series film provided with a resin layer A formed from the aliphatic polyester series resin composition according to any of claim 1 to 5.

7.  The aliphatic polyester series film according to claim 6, obtained by melting, film-forming and stretching 1.1-fold or more in at least one axial direction the aliphatic polyester series resin composition according to any of claim 1 to 5.

8.  The aliphatic polyester series film provided with
    a resin layer A formed from the aliphatic polyester series resin composition according to any A of claim 1 to 5, and
    a resin layer B formed from a aliphatic polyester series resin composition B containing an aliphatic polyester series resin and a fine powder filler, and, containing no thermoplastic resin incompatible with said aliphatic polyester series resin and no compatibilizing agent.

9.  The aliphatic polyester series film according to claim 8, wherein
    the content in fine powder filler in the resin layer A is 10 to 50 percent in mass with respect to the total mass of the resin layer A, and
    the content in fine powder filler in the resin layer B is 0.1 to 5 percent in mass with respect to the total mass of the resin layer B.

10. The aliphatic polyester series film according to claim 8 or 9, wherein the aliphatic polyester series resin of the resin layer B is a lactic acid series polymer.

11. The aliphatic polyester series film according to any of claim 8 to 10, obtained by melting and film-forming separately each said aliphatic polyester series resin composition A and said aliphatic polyester series resin composition B to be layered, and stretching the obtained layered film 1.1-fold or more in at least one axial direction.

12. The aliphatic polyester series film according to any of claim 6 to 11, wherein the dynamic storage modulus is 1.0GPa to 3.0GPa as measured by dynamic viscoelasticity measurement at 10Hz frequency and 23˚C temperature.

13. A reflective film comprising the aliphatic polyester series film according to any of claim 6 to 12.

14. The reflective film according to claim 13 used as a constitutive member of a liquid crystal display, an illumination instrument or an illuminated sign.

15. A reflective plate provided with a constitution wherein the aliphatic polyester series film according to any of claim 6 to 12 is layered against a metal plate or a resin plate.

16. The reflective plate according to claim 15 used as a constitutive member of a liquid crystal display, an illumination instrument or an illuminated sign.

**INTERNATIONAL SEARCH REPORT**

International application No.

PCT/JP2008/000749

A. CLASSIFICATION OF SUBJECT MATTER
*C08L67/00*(2006.01)i, *B29C55/02*(2006.01)i, *B32B27/36*(2006.01)i, *C08J5/18* (2006.01)i, *C08K3/00*(2006.01)i, *C08L23/00*(2006.01)i, *C08L101/00*(2006.01)i, *G02B1/04*(2006.01)i, *G02B5/08*(2006.01)i, *B29K67/00*(2006.01)n,
According to International Patent Classification (IPC) or to both national classification and IPC

B. FIELDS SEARCHED

Minimum documentation searched (classification system followed by classification symbols)
C08L1/00-101/16, B29C55/02, B32B27/36, C08J5/18, C08K3/00-13/08, G02B1/04, G02B5/08

Documentation searched other than minimum documentation to the extent that such documents are included in the fields searched
Jitsuyo Shinan Koho        1922-1996   Jitsuyo Shinan Toroku Koho    1996-2008
Kokai Jitsuyo Shinan Koho   1971-2008   Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-241445 A  (Mitsui Chemicals, Inc.), 14 September, 2006 (14.09.06), Claims; Par. Nos. [0030] to [0040], [0047] to [0048], [0087], [0099] to [0102]; examples (Family: none) | 1-7,12 |
| X | JP 2006-77063 A  (Kaneka Corp.), 23 March, 2006 (23.03.06), Claims; Par. Nos. [0016] to [0022], [0028], [0034]; examples (Family: none) | 1-7,12 |
| P,X | JP 2007-106843 A  (Mitsui Chemicals, Inc.), 26 April, 2007 (26.04.07), Claims; Par. Nos. [0025] to [0033], [0036] to [0037], [0039]; examples (Family: none) | 1-7,12 |

☒ Further documents are listed in the continuation of Box C.     ☐ See patent family annex.

| | |
|---|---|
| *     Special categories of cited documents: <br> "A"   document defining the general state of the art which is not considered   to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search <br> 02 June, 2008 (02.06.08) | Date of mailing of the international search report <br> 10 June, 2008 (10.06.08) |
|---|---|
| Name and mailing address of the ISA/ <br>   Japanese Patent Office | Authorized officer |
| Facsimile No. | Telephone No. |

Form PCT/ISA/210 (second sheet) (April 2007)

**EP 2 130 870 A1**

**INTERNATIONAL SEARCH REPORT**

| International application No. |
| --- |
| PCT/JP2008/000749 |

C (Continuation).   DOCUMENTS CONSIDERED TO BE RELEVANT

| Category* | Citation of document, with indication, where appropriate, of the relevant passages | Relevant to claim No. |
| --- | --- | --- |
| E,X | JP 2008-88315 A  (Mitsubishi Chemical Corp.), 17 April, 2008 (17.04.08), Claims; Par. Nos. [0065] to [0068], [0131], [0135]; examples (Family: none) | 1-7,12 |
| P,A | JP 2008-30459 A  (Toray Industries, Inc.), 14 February, 2008 (14.02.08), Claims; Par. Nos. [0011] to [0022], [0029] to [0030], [0033] to [0035], [0054]; examples (Family: none) | 1-16 |
| A | JP 2007-21952 A  (Mitsubishi Plastics, Inc.), 01 February, 2007 (01.02.07), Claims; Par. Nos. [0027] to [0033], [0045] to [0047], [0070] to [0071]; examples (Family: none) | 1-16 |
| A | JP 2000-355090 A  (Toray Industries, Inc.), 26 December, 2000 (26.12.00), Claims; Par. Nos. [0005] to [0016], [0039] to [0043]; examples (Family: none) | 1-16 |
| P,A | WO 2008/023758 A1  (JSR Corp.), 28 February, 2008 (28.02.08), Claims; Par. Nos. [0047] to [0056], [0083], [0096]; examples (Family: none) | 1-7,12 |
| E,A | JP 2008-115295 A  (Mirai Kasei Kabushiki Kaisha), 22 May, 2008 (22.05.08), Claims; Par. Nos. [0014] to [0018], [0027] to [0036]; examples (Family: none) | 1-7,12 |

Form PCT/ISA/210 (continuation of second sheet) (April 2007)

| INTERNATIONAL SEARCH REPORT | International application No. |
|---|---|
| | PCT/JP2008/000749 |

Continuation of A. CLASSIFICATION OF SUBJECT MATTER
  (International Patent Classification (IPC))

*B29L7/00*(2006.01)n, *B29L9/00*(2006.01)n, *B29L11/00*(2006.01)n

(According to International Patent Classification (IPC) or to both national classification and IPC)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004104077 A

- JP 2000355090 A